# DEMANDE DE BREVET EUROPEEN

(11) **EP 4 660 965 A1**
(43) Date de publication de la demande: **10.12.2025**
(21) Numéro de dépôt: 25162365.8
(22) Date de dépôt: 07.03.2025
(51) Int. Cl.: G06V 10/82, G06V 20/54, G08G 1/054, G08G 1/017, G08G 1/04

(54) **SYSTÈME D ACQUISITION D'IMAGES POUR AUTOMATE DE CONTRÔLE ROUTIER**

(30) Priorité: 03.06.2024 FR 2405791
(71) Demandeur: IDEMIA Road Safety France, 92400 Courbevoie (FR)
(72) Inventeur: ALLIOT, Samuel, 92400 COURBEVOIE (FR); HARBI, Rachid, 92400 COURBEVOIE (FR); CARRION, Grégoire, 92400 COURBEVOIE (FR); BONNOT, Stéphane, 92400 COURBEVOIE (FR)
(74) Mandataire: IPS

(57) **Abrégé**

Système (2000) d'acquisition d'images pour automate (1001) de contrôle routier configuré pour :
(a) mesurer (3001) la trajectoire (TRJ), la position (POS) et la vitesse (VIT) d'au moins un véhicule (1003) à l'aide d'un dispositif (2003) de pistage de véhicules routiers ;
(b) illuminer (3002) le véhicule (1003) à l'aide d'un dispositif (2001) d'illumination infrarouge ;
(c) acquérir (3003), à l'aide d'une caméra (2002) sensible aux rayonnements infrarouges, au moins une image infrarouge (IM-IR) du véhicule (1003) illuminé par le dispositif (2001) d'illumination infrarouge ;
(d) traiter (3004) l'image infrarouge (IM-IR) dudit véhicule (1003) à l'aide d'un dispositif (2006) de traitement de données ;
lorsque la vitesse (VIT) du véhicule, la position (POS) du véhicule, la catégorie (CAT) du véhicule, et/ou un comportement (COMP) du conducteur satisfait à au moins un critère (CR-INF) d'infraction :
(e) illuminer (3005) le véhicule à l'aide d'un dispositif d'éclairage en lumière visible ;
(f) acquérir (3006) une image en couleur (IM-VIS) du véhicule (1003) illuminé à l'aide d'un dispositif photographique (2005) en couleurs

## Description

### Domaine technique

La présente invention concerne un système et un procédé d'acquisition d'images pour automate de contrôle routier.

### Arrière-plan technique

Il est une pratique courante de contrôler ou de surveiller le trafic routier à l'aide d'automates comprenant des cinémomètres - dispositifs radars ou lasers pour la mesure de vitesse et de position des véhicules -, et des systèmes optiques configurés pour l'acquisition d'images de l'intérieur et/ou de l'extérieur des véhicules. Ces automates sont programmés pour détecter et caractériser certaines infractions routières commises par les conducteurs des véhicules grâce à l'analyse combinée des signaux des cinémomètres et des images acquises. Ils permettent notamment de produire les éléments de typage et de preuve de l'infraction, et d'extraire des images les informations telles que les numéros d'immatriculation permettant l'identification du propriétaire du véhicule en infraction pour le dressage du procès-verbal.

La fiabilité de ces automates repose en partie sur l'acquisition d'images dont la qualité permet une identification des éléments pertinents pour la caractérisation de l'infraction. Cette identification ne doit souffrir d'aucune ambiguïté quelles que soient les conditions lumineuses ou météorologiques dans lesquelles ces images sont acquises. Aussi est-il essentiel que les systèmes optiques des automates de contrôle routier présentent, de jour comme de nuit, par beau temps ou lors d'intempéries, les meilleures performances optiques pour assurer une parfaite concordance entre les données des cinémomètres et les images acquises par ces systèmes pour chaque véhicule contrôlé.

A cet effet, il est courant de munir les systèmes d'acquisition d'images d'un dispositif d'éclairage lumineux de forte intensité capable d'illuminer un véhicule pendant un bref instant, typiquement entre quelques millièmes à quelques centièmes de seconde, afin de fixer son mouvement et/ou de compenser de mauvaises conditions lumineuses pour la prise d'une image photographique du véhicule au moment où il commet l'infraction. Ce dispositif d'éclairage, communément appelé « flash photographique » ou simplement « flash » est particulièrement avantageux en conditions dégradées de luminosité ambiante, notamment la nuit ou lors d'intempéries. Il offre également la possibilité d'obtenir une image en couleurs du véhicule quelles que soient les conditions de luminosité ambiante. Une image en couleurs permet généralement une meilleure identification du véhicule et est parfois exigée par certaines législations pour constater une infraction.

GB 2272305 A [RICOH KK [JP]] 11.05.1994 décrit un système d'acquisition d'image pour automate de contrôle routier permettant d'acquérir des photographies d'un véhicule en infraction tel qu'un excès de vitesse à différents grossissements et à différents angles de vue. Le système comprend un flash stroboscopique permettant d'éclairer le véhicule lors de l'acquisition des photographies.

EP 2 157 558 A1 [JENOPTIK ROBOT GMBH] 24.02.2010 décrit une méthode et un système de contrôle routier dans lesquels l'intensité d'illumination des véhicules lors du contrôle varie selon leur position sur la chaussée. Ils permettent d'améliorer la visibilité des éléments pertinents pour la caractérisation de l'infraction, optimiser la consommation d'énergie et augmenter la durée de vie du des ampoules flash utilisées pour l'illumination.

WO 2020/014731 A1 [ACUSENSUS PTY LTD [AU]] 23.01.2020 décrit un système de contrôle de routier comprenant un dispositif d'illumination de type flash configuré pour illuminer un véhicule en infraction dans un domaine réduit du spectre électromagnétique entre 700 et 1000nm. Ce type d'illumination permet de réduire les conséquences négatives de l'éblouissement lors de l'acquisition d'une image du véhicule et d'obtenir une meilleure visibilité de l'intérieure de l'habitacle du véhicule.

Il est également courant de munir les systèmes d'acquisition d'images pour automate de contrôle routier d'un dispositif d'acquisition d'image sensible au rayonnement infrarouge, soit en remplacement du dispositif d'acquisition d'images en lumière visible, soit en complément. L'intérêt d'utiliser un dispositif d'acquisition d'image sensible au rayonnement infrarouge est la possibilité de révéler certains éléments particuliers du véhicule ou de son conducteur que les dispositifs d'acquisition d'images en lumière visible rendent difficilement visibles, notamment dans des conditions dégradées de luminosité ambiante. Parmi ces éléments, il est possible de citer le numéro d'immatriculation du véhicule ou l'intérieur de son habitacle. Les images infrarouges peuvent également faire l'objet d'un traitement numérique pour le calcul de vitesse des véhicules.

CN 101770692 A [UNIV JILIANG CHINA] 07.07.2010 décrit un système de contrôle de vitesse de véhicule en infractions comprenant un dispositif d'illumination à l'aide d'un rayonnement en proche infrarouge et un dispositif d'acquisition d'image sensible audit rayonnement. Le système permet de remplacer l'utilisation d'un système de contrôle fondé sur un dispositif d'illumination en lumière visible de type flash, et ainsi de se dispenser de l'utilisation d'ampoules de type flash dont la durée de vie est généralement courte et de supprimer le risque d'éblouissement des conducteurs.

WO 2010/085931 A1 [JENOPTIK ROBOT GMBH [DE]] 05.08.2010 décrit un système de mesure de la vitesse d'un véhicule sur un tronçon de route. Le système comprend deux caméras infrarouges situées l'une et l'autre à une extrémité opposée du tronçon, configurées pour acquérir une image de la plaque d'immatriculation d'un véhicule. Chaque caméra est associée à un minuteur permettant le calcul de la vitesse du véhicule. Le système comprend en outre une caméra sensible à la lumière visible et un dispositif d'illumination en lumière visible de type flash pour l'acquisition d'une image couleur du véhicule si sa vitesse est supérieure à la limite autorisée.

US 2013/191014 A1 [XEROX CORP [US]] 25.07.2013 décrit une méthode de mesure de vitesse pour automate de contrôle routier fondée sur le traitement numérique d'une pluralité d'images infrarouges d'un véhicule acquise selon une fréquence donnée. La vitesse est calculée à partir d'une estimation du déplacement d'une roue du véhicule entre deux images successives.

WO 2014/163892 A1 [3M INNOVATIVE PROPERTIES CO [US]] 09.10.2014 décrit un système de mesure de la vitesse d'un véhicule sur un tronçon de route. Le système comprend deux caméras infrarouges situées l'une et l'autre à une extrémité opposée du tronçon et configurées pour acquérir une image de la plaque d'immatriculation d'un véhicule et calculer sa vitesse par différence d'horodatage. Le système comprend en outre une caméra sensible à la lumière visible et un dispositif d'illumination en lumière visible de type flash pour l'acquisition d'une image couleur du véhicule si sa vitesse est supérieure à la limite autorisée.

WO 2017/006583 A1 [OMRON TATEISI ELECTRONICS CO [JP]] 12.01.2017 décrit un système de contrôle routier configuré pour acquérir des images monochromes de véhicules en infraction sous illumination infrarouge. Les images monochromes font l'objet d'une colorisation ultérieure fondée sur l'application d'un modèle colorimétrique RVB dont l'intensité de chacune des couleurs rouge, vert et bleu est associée à une gamme du spectre électromagnétique infrarouge.

WO 2019/137385 A1 [UNIV HEFEI NORMAL [CN]] 18.07.2019 décrit un système de contrôle de vitesse de véhicule comprenant une caméra sensible au rayonnement infrarouge, une caméra sensible à la lumière visible, un dispositif d'illumination en lumière visible, et un capteur photosensible. Le système dispose de deux modes de fonctionnement selon les conditions de de luminosité ambiante : un premier mode adapté à des conditions dégradées de luminosité ambiante dans lequel seule la caméra sensible au rayonnement infrarouge est utilisée pour acquérir des images des véhicules en excès de vitesse ; un deuxième mode adapté à des conditions optimales de luminosité ambiante dans lequel seule la caméra sensible à la lumière visible est utilisé pour cette acquisition. Le dispositif d'illumination en lumière visible est utilisé dans le deuxième mode pour apporter un supplément d'illumination selon les besoins. Le système permet de réduire la consommation d'énergie, augmenter la durée de vie de ses composants et réduire le risque d'éblouissement des conducteurs par l'usage de dispositif d'illumination de forte intensité de type flash.

EP 4 261 803 A1 [ROADIA GMBH [DE] 18.10.2023 décrit une méthode et un système de mesure de vitesse de véhicules sur une route fondé sur une analyse de la direction des vélocités calculées pour un véhicule à partir d'un traitement de plusieurs images dudit véhicule. Le système comprend un dispositif flash pour améliorer la qualité des images.

### Résumé de l'invention

### Problème technique

La nature des éléments matériels et les conditions dans lesquels ils doivent être acquis pour la constitution d'une preuve d'infraction d'un véhicule par un automate de contrôle routier sont généralement fixées par la législation et la réglementation en vigueur dans les pays, villes ou régions dans lesquels ledit automate est déployé. Ils peuvent donc varier d'un pays, d'une région ou d'une ville à l'autre.

Aussi, certaines législations et/ou réglementations exigent-elles, pour qu'une infraction constatée soit légalement recevable, qu'une photographie couleur du véhicule en cause soit fournie, la photographie en couleurs étant considérée alors comme un élément de preuve de l'infraction permettant d'identifier sans ambiguïté le véhicule.

Or, il est notoire qu'une photographie en couleurs d'une qualité suffisante pour permettre une identification claire et sans ambiguïté des éléments nécessaires pour constater une infraction ne peut être acquise qu'à l'aide d'un dispositif d'éclairage ou d'illumination d'intensité suffisante, en particulier lorsque les conditions de luminosité ambiante sont dégradées, par exemple en conditions nocturnes. Les systèmes et dispositifs d'acquisition d'images mettant en œuvre uniquement ou principalement des caméras et dispositifs d'éclairage fonctionnant dans le spectre électromagnétique infrarouge ne sont pas donc pas adaptés pour satisfaire une telle exigence, y compris ceux impliquant une colorisation a posteriori des images.

D'autre part, les restrictions imposées par les législations et/ou réglementations en matière de circulation routière peuvent varier selon le type ou la catégorie des véhicules en circulation et/ou la zone dans laquelle ils sont susceptibles de circuler. A titre d'exemples, les limitations de vitesse et/ou de changement de voie peuvent être différentes selon le tonnage et/ou le gabarit des véhicules : les véhicules dont la masse est supérieure ou égale à 3,5 tonnes peuvent se voir imposer une vitesse maximale de circulation inférieure à celle des autres véhicules de masse inférieure ainsi qu'une interdiction de dépassement par changement de voie sur certains tronçons de route. Selon d'autres exemples, certaines municipalités peuvent interdire, définitivement ou sur une plage horaire donnée, la circulation de certains types de véhicules dans certaines zones urbaines dans le cadre d'un programme de lutte contre la pollution urbaine.

Or, si les contrôles des prescriptions en matière de circulation sont de plus en plus assurés par des automates de contrôle routier, ils échouent cependant à procéder à l'acquisition des images opportunément et utilement selon les restrictions applicables à chaque catégorie du véhicule ou au comportement des conducteurs. En d'autres termes, ils ne procèdent à aucune discrimination positive fondée sur la catégorie du véhicules et/ou le type d'infraction commise. Généralement, ils procèdent systématiquement à une acquisition d'images dès lors qu'une infraction est constatée peu importe qu'elle concerne ou non la catégorie du véhicule incriminé. Il arrive également que certaines catégories de véhicule ne fassent l'objet que très rarement d'un contrôle, par exemple les véhicules pour lesquelles la vitesse maximale autorisée de circulation est inférieure à celle d'une autre catégorie de véhicule.

Trois inconvénients majeurs découlent de cette situation. Premièrement, un traitement ultérieur des infractions constatées par les automates routiers est nécessaire afin d'éliminer celles qui n'ont pas lieu d'être. Deuxièmement, certaines catégories de véhicule peuvent échapper au contrôle en raison des limitations propres à l'automate. Troisièmement, pour les automates routiers mettant en œuvre des dispositifs photographiques en couleurs sous lumière visible, il y a une utilisation excessive et inutile des dispositifs d'illumination de type flash, engendrant une consommation plus importante d'énergie, une réduction de la durée de vie dudit dispositif et un risque accru d'éblouissement intempestif et superflu des conducteurs notamment dans des conditions dégradées de luminosité ambiante et/ou en cas d'intempérie.

Il existe donc un besoin d'un système polyvalent d'acquisition d'images pour automate de contrôle routier capable à la fois de fournir une photographie en couleurs de qualité de tout véhicule en conditions d'infraction selon la législation et/ou la règlemention applicable à chaque catégorie de véhicule tout en réduisant l'usage superflu des dispositifs d'illumination de type flash et le risque d'éblouissement des conducteurs.

### Solution technique

Selon un premier aspect de l'invention, il est fourni un système d'acquisition d'images pour automate de contrôle routier tel que décrit dans la revendication 1, les revendications dépendantes étant des modes avantageux de réalisation.

Selon un deuxième aspect de l'invention, il est fourni un procédé d'acquisition d'images contrôle routier tel que décrit dans la revendication 11, les revendications dépendantes étant des modes avantageux de réalisation.

### Brève description des dessins

Fig. 1 est une représentation schématique d'une route contrôlée au moyen d'une unité de contrôle routier.
Fig. 2 est une représentation schématique de la structure d'un système d'acquisition d'image pour automate de contrôle routier conformément à l'invention.
Fig. 3 est un diagramme de processus d'un système d'acquisition d'image pour automate de contrôle routier conformément à l'invention.
Fig. 4 est un diagramme de processus d'un système d'acquisition d'image pour automate de contrôle routier selon certains modes de réalisation.

### Description détaillée des modes de réalisation

Dans le cadre de la présente invention, il est entendu par « catégorie » de véhicules une catégorie représentative d'une caractéristique distinctive d'un type de véhicule, notamment la taille (hauteur et/ou longueur), le poids, le nombre d'essieux et/ou la motorisation. A titre d'exemple, en France, une catégorie peut-être une des huit catégories principales de véhicules, ou une des leurs sous-catégories, telles que définies par l'article R311-1 du Code de la Route en vigueur le 15 mai 2024.

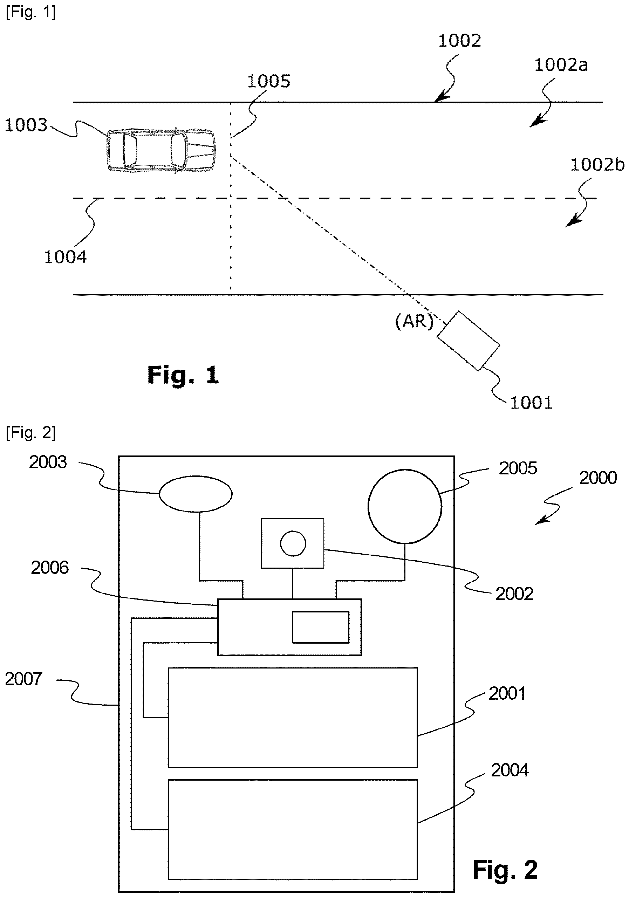

En référence à la Fig. 1, en exemple, un automate 1001 de contrôle routier est positionnée aux abords d'une route 1002 sur laquelle circulent un véhicule 1003. De manière équivalente, l'automate 1001 de contrôle routier peut être montée sur un pont ou un portique traversant la route 1002 ou encore sur une potence. La route 1002 peut être tout type d'espace de circulation autorisant la circulation des véhicules, par exemple, une autoroute, une rue, un chemin, ... De préférence, la route 1002 comprend au moins deux voies 1002a, 1002b de circulation. Les voies de circulation 1002a, 1002b sont généralement délimitées par un marquage appliqué sur la surface de la route 1002. Ce marquage est généralement un balisage constitué de signes visuels tels qu'une ligne continue, une ligne discontinue, ou encore des plots.

L'automate 1001 de contrôle routier est généralement fixe par rapport aux voies 1002a,1002b de circulation de la route 1002. Il se situe à une distance définie du bord la route afin de disposer d'un recul suffisant. Il est disposé de préférence à une hauteur supérieure à 1,2 m, voire supérieure à 2m, voire encore supérieure à 3 m. A cet effet, l'automate 1001 de contrôle routier peut être disposée sur un mât ou une potence (non représenté). La disposition en hauteur de l'automate 1001 de contrôle routier permet de limiter le masquage des champs de détection du cinémomètre et des systèmes optiques de l'automate 1001 de contrôle routier.

En général, pour le contrôle de vitesse, l'automate 1001 de contrôle est orienté vers une ligne d'infraction 1005 ayant fonction de ligne de référence. Cette ligne d'infraction 1005 est généralement d'une ligne virtuelle dont la position est déterminée lors de l'installation de l'automate 1001 de contrôle. Pour le contrôle de franchissement de ligne d'arrêt, telle qu'une ligne de feux ou de stop, la ligne d'infraction 1005 est souvent constituée par une ligne de marquage au sol.

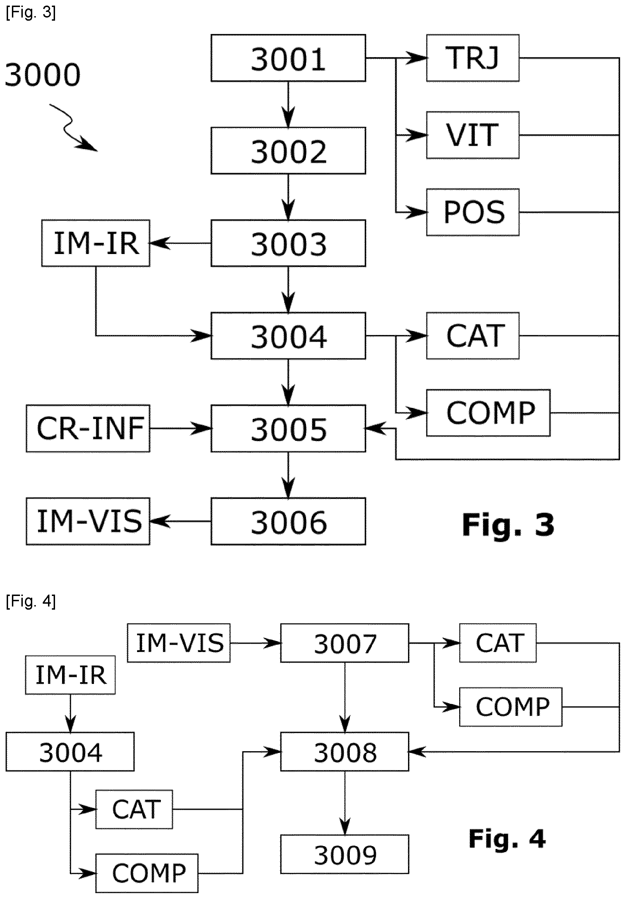

Selon un premier aspect de l'invention, en référence aux Fig. 2 & 3, il est fourni un système 2000 d'acquisition d'images pour automate 1001 de contrôle routier comprenant :
- un dispositif 2001 d'illumination infrarouge ;
- une caméra 2002 sensible aux rayonnements infrarouges ;
- un dispositif 2003 de pistage de véhicules routiers ;
- un dispositif 2004 d'éclairage en lumière visible de type flash ;
- un dispositif photographique 2005 en couleurs ;
- un dispositif 2006 de traitement de données configuré pour traiter les images infrarouges IM-IR acquises par la caméra 2002 sensible aux rayonnements infrarouges par application d'un premier algorithme ALG-1 de classification préalablement entraîné pour détecter les véhicules 1003, ledit algorithme étant en outre préalablement entraîné pour classer les véhicules 1003 selon leur catégorie CAT, et/ou classer un ou plusieurs comportements COMP des conducteurs des véhicules 1003 ;
le système 2000 est configuré pour réaliser les étapes suivantes :
(a) mesurer 3001 la trajectoire TRJ, la position POS et la vitesse VIT d'au moins un véhicule 1003 à l'aide du dispositif 2003 de pistage de véhicules routiers ;
(b) illuminer 3002 le véhicule 1003 à l'aide du dispositif 2001 d'illumination infrarouge ;
(c) acquérir 3003, à l'aide de la caméra 2002 sensible aux rayonnements infrarouges, au moins une image infrarouge IM-IR du véhicule 1003 illuminé par le dispositif 2001 d'illumination infrarouge ;
(d) traiter 3004 l'image infrarouge IM-IR dudit véhicule 1003 à l'aide du dispositif 2006 de traitement de données ;
lorsque la vitesse VIT du véhicule, la position POS du véhicule, la catégorie CAT du véhicule, et/ou un comportement COMP du conducteur satisfait à au moins un critère CR-INF d'infraction :
(e) illuminer 3005 le véhicule à l'aide du dispositif d'éclairage en lumière visible ;
(f) acquérir 3006 une image en couleur IM-VIS du véhicule 1003 illuminé à l'aide du dispositif photographique 2005 en couleurs.

Par critère CRIT-INF d'infraction, il est entendu tout critère d'infraction susceptible d'être défini sur la base des législations et/ou des règlements quant aux interdictions et restrictions affectant la vitesse VIT du véhicule, la position POS du véhicule, la catégorie CAT du véhicule, et/ou le comportement COMP d'un conducteur au lieu d'installation de l'automate 1001 routier.

Le dispositif 2006 de traitement peut être de tout type adapté. En particulier, il peut être un circuit électronique de type contrôleur. Le circuit électronique peut comprendre une ou plusieurs unités centrales de traitement (CPU) et/ou un ou plusieurs processeurs graphiques (GPU). Il peut également comprendre d'autres composants électroniques tels que des interfaces d'entrée/sortie, des dispositifs de stockage non volatils ou volatils, et des bus de communication pour le transfert de données entre les composants internes du dispositif ou avec des composants externes. L'un des dispositifs d'entrée/sortie peut être une interface utilisateur pour l'interaction homme-machine, par exemple une interface utilisateur graphique pour afficher des informations compréhensibles par l'homme, lors d'une opération de maintenance.

Le dispositif 2006 de traitement de données peut mettre en œuvre les taches qui lui sont assignées en exécutant un programme informatique. Ce programme comprend des instructions qui, lorsque le programme est exécuté par le dispositif de traitement de données, conduisent celui-ci à mettre en œuvre le procédé de configuration. Le programme informatique peut comprendre des instructions écrites dans tout type de langage de programmation, compilé ou interprété.

Selon certains modes avantageux de réalisation, un critère CR-INF d'infraction pour la vitesse VIT du véhicule 1003 est le dépassement de la vitesse maximale autorisée pour une ou plusieurs catégories (CAT) de véhicules (1003). A titre d'exemple, en France, dans le cas où la législation impose une vitesse maximale de 130 km/h sur route pour les véhicules de catégorie M1 (voitures) ou L (motocyclette) et une vitesse maximale de 90 km/h aux véhicules de catégories M2, M3 (autobus), N et O (camions, camping-cars), le critère d'infraction peut être une de ces limitations appliquées auxdites catégories.

Un avantage de ce mode de réalisation est qu'il est procédé à une discrimination positive fondée sur la catégorie du véhicule et la vitesse maximale autorisée pour cette catégorie. Ainsi, une image couleur sera acquise uniquement lorsque la vitesse d'un véhicule d'une catégorie définie sera supérieure à la vitesse maximale autorisée pour cette catégorie de véhicule. L'infraction peut être alors constatée uniquement pour cette catégorie de véhicules ; l'automate ne procède pas à l'acquisition d'images de véhicules d'autres catégories même si leur vitesse est également supérieure à ladite vitesse maximale.

Outre le contrôle de vitesse, le système selon l'invention est adapté pour caractériser d'autres types d'infractions. Ainsi, selon certains modes avantageux de réalisation, le critère CR-INF d'infraction pour la trajectoire TRJ et/ou la position POS du véhicule 1003 est choisi parmi le franchissement non autorisé d'une ligne d'arrêt, le non-respect des distances entre véhicules, l'interdiction de circulation routière dans une zone géographique définie, l'interdiction de circulation sur une voie routière pour une ou plusieurs catégories de véhicule, le dépassement non autorisé d'un véhicule par un autre selon un ou plusieurs catégories de véhicule.

A titre d'exemples, un franchissement non-autorisé d'une ligne d'arrêt peut être le franchissement non-autorisé d'une ligne de feux tricolores ou d'une ligne de temps d'arrêt tel qu'une signalisation « stop ». Une interdiction de circulation routière dans une zone géographique définie peut être une interdiction de circulation de certains véhicules considérés comme polluants dans certaines zones urbaines à faible émission ou encore les interdictions temporaires de circulation pour des raisons de sécurité et/ou de santé publique. L'interdiction de circulation sur une voie routière pour une ou plusieurs catégories de véhicule peut être l'interdiction de circulation sur des voies réservées à certaines catégories de véhicules tels que les bus, les taxis ou certains véhicules électriques.

Le critère CR-INF d'infraction peut également se rapporter à certains comportements des conducteurs de véhicules, notamment lorsqu'ils sont considérés à risque ou dangereux par la législation. A ce titre, selon certains modes de réalisation, le critère CR-INF pour le comportement COMP du conducteur du véhicule 1003 est choisi parmi l'utilisation d'un dispositif interdit par le conducteur du véhicule et le non-port des équipements individuels de sécurité. Des exemples de critère CR-INF d'infraction relatif à l'utilisation d'un dispositif interdit peuvent être l'utilisation par le conducteur d'un dispositif de télécommunication mobile ou tout autre dispositif électronique susceptible de perturber l'attention du conducteur, par exemple un téléphone portable, une tablette interactive ou encore un téléviseur.

Bien que le numéro d'immatriculation ne soit pas toujours requis pour identifier l'auteur d'une infraction routière, la plupart des législations nationales réfèrent néanmoins à ce numéro pour identifier les propriétaires des véhicules en infraction lors du dressage du procès-verbal. Aussi, selon certains modes avantageux de réalisation, le premier algorithme ALG-1 de classification est en outre préalablement entraîné pour extraire, à partir des images infrarouges, le numéro d'immatriculation des véhicules.

Outre l'indentification du propriétaire du véhicule en infraction, l'extraction du numéro d'immatriculation peut également être exploité pour constater une infraction lorsqu'un critère d'infraction s'applique sur ce numéro. Ainsi, selon certains modes préférés de réalisation, le système est en outre configuré pour exécuter les étapes (e) et (f) lorsque le numéro d'immatriculation satisfait à au moins un critère CR-INF d'infraction. A titre d'exemple, la circulation des véhicules dans une zone géographique définie, notamment une zone urbaine, peut être autorisée qu'à un nombre restreint de véhicules identifies selon leur numéro d'immatriculation. Autrement dit, une liste de véhicules identifiés par leur numéro d'immatriculation est préalablement établie, et seuls les véhiculés de cette liste sont autorisés à circuler dans la zone géographique définie. Tout véhicule circulant au lieu d'opération de l'automate dont le numéro n'est pas sur la liste des véhicules autorisés est en infraction ; les étapes (e) et (f) sont alors exécutées. La liste des numéros d'immatriculation des véhicules autorisés à la circulation est de tous types adaptés. Elle peut être une liste de véhicules spécifiquement autorisés sans considération de leur catégorie. Elle peut être encore une liste de véhicules d'une ou plusieurs catégories particulières dont le numéro d'immatriculation est associé audites catégories, par exemple des véhicules de catégorie M1 (voitures) pour la France, ou des véhicules ayant une motorisation spécifique, électrique ou hybride notamment.

Le constat d'une infraction par un automate de contrôle routier, notamment en ce qui concerne les éléments de typage de l'infraction, peut parfois échouer ou être entaché d'erreurs rédhibitoires qui ne permettent pas de valider légalement l'infraction. D'autre part, certaines législations ou réglementations peuvent exiger que les éléments de typage de l'infraction soient constatés sur des images couleurs plutôt que des images infrarouges. Selon certains modes avantageux de réalisation, en référence à la Fig. 4, le dispositif 2006 de traitement de données est en outre configuré pour réaliser les étapes suivantes :
g) traiter 3007 l'image en couleur IM-VIS du véhicule 1003 acquise à l'aide du dispositif photographique 2005 par application d'un deuxième algorithme ALG-2 de classification préalablement entraîné pour détecter, à partir desdites images en couleurs IM-VIS, les véhicules 1003, ledit algorithme étant en outre préalablement entraîné pour classer les véhicules selon leur catégorie CAT, et/ou classer un ou plusieurs comportement COMP des conducteurs des véhicules 1003 ;
(h) comparer 3008 les informations inférées lors du traitement par le premier algorithme ALG-1 avec les informations inférées du traitement par le deuxième algorithme ALG-2 de classification ;
(i) valider 3009 les informations inférées lors du traitement par le premier algorithme ALG-1 si lesdites informations correspondent à celles inférées lors du traitement par le deuxième algorithme ALG-2 de classification.

La comparaison des informations inférées par les deux algorithmes ALG-1 et ALG-2, assure une double vérification des éléments de typage permettant de constater l'infraction. Le risque d'erreurs est réduit, et parce-que le typage est également réalisé sur les images en couleurs, il est satisfait aux prescriptions de certaines législations ou réglementations en la matière.

Pour la mise en œuvre de l'invention, le premier algorithme de classification et/ou le deuxième algorithme de classification est de tout type adapté pour procéder à une classification d'objets fondée sur une analyse d'images. Selon certains modes préférés de réalisation, le premier algorithme ALG-1 de classification et/ou le deuxième algorithme ALG-2 de classification sont des réseaux de neurones artificiels convolutifs, de préférence des réseaux de neurones artificiels convolutifs adaptés pour une exécution sur des systèmes embarqués. Des exemples de réseau de neurones consultatifs sont les versions du réseau MobileNet telles que décrites dans Howard, Andrew G., et al. (2017) "Mobilenets: Efficient convolutional neural networks for mobile vision applications." arXiv preprint arXiv:1704.04861 ; Sandler, Mark, et al. (2018) "Mobilenetv2: Inverted residuals and linear bottlenecks." Proceedings of the IEEE conference on computer vision and pattern recognition ; Howard, Andrew, et al. (2019) "Searching for mobilenetv3." Proceedings of the IEEE/CVF international conference on computer vision ; Qin, Danfeng, et al. (2024) "MobileNetV4-Universal Models for the Mobile Ecosystem." arXiv preprint arXiv:2404.10518.

Selon un premier exemple, particulièrement adapté pour les modes de réalisation dans lesquels un critère CR-INF d'infraction pour la vitesse VIT du véhicule 1003 est le dépassement de la vitesse maximale autorisée pour une ou plusieurs catégories (CAT) de véhicules 1003, le premier algorithme ALG-1 de classification est un réseau de neurones convolutifs de type MobileNetv2. Le réseau est préalablement entraîné sur un ensemble d'images de véhicules routiers classés en 13 catégories. L'ensemble d'entraînement peut comprendre un nombre sensiblement similaire d'images, infrarouges ou en lumière visible, de véhicules pour chaque catégorie. Alternativement, il peut comprendre un nombre différent d'images pour chaque catégorie, ce nombre étant représentatif de la fréquence de circulation des véhicules de chaque catégorie sur la voie de circulation. A titre d'exemple, sur une voie de circulation où les véhicules de catégorie N ou O (poids lourds) selon la législation française représente 40% du trafic routier, l'ensemble d'entraînement peut être constitué d'au moins 40% d'images de cette catégorie.

Selon un deuxième exemple, particulièrement adapté pour les modes de réalisation dans lesquels le critère CR-INF pour le comportement COMP du conducteur du véhicule 1003 est choisi parmi l'utilisation d'un dispositif interdit par le conducteur du véhicule et le non-port des équipements individuels de sécurité, le premier algorithme ALG-1 de classification est un réseau de neurone convolutif comprenant deux modules.

Un premier module est configuré pour détecter et délimiter la partie des images de véhicules correspondant au conducteur. Pour cela, il peut faire l'objet d'un entraînement préalable sur un ensemble d'images d'entraînement comprenant des images de véhicules dans lesquelles la partie d'limage correspondant au conducteur est annotée. Un deuxième module est configuré pour détecter s'il y a une présence ou une absence d'infraction. Pour cela, il peut faire l'objet d'un entraînement préalable sur un ensemble d'images d'entraînement comprenant des images de véhicules classées selon que les conducteurs de véhicules sont en infraction ou non, tel que l'utilisation ou non d'un dispositif interdit, par exemple un téléphone mobile, ou le port ou le non-port d'un équipement de sécurité, par exemple un casque pour les véhicules deux roues ou la ceinture.

Le dispositif 2003 de pistage des véhicules routiers est tout dispositif adapté et configuré pour mesurer la position POS, la trajectoire TRAJ et/ou la vitesse VIT des véhicules routiers sur le ou les voies de circulation où un automate de contrôle routier est susceptible d'être exploité.

Le dispositif 2003 de pistage peut notamment exploiter des phénomènes d'échos et/ou réflexion des ondes électromagnétiques. Selon des modes préférés de réalisation, le dispositif 2003 de pistage de véhicules (1003) comprend un télémètre, de préférence de type Lidar ou RADAR.

En complément ou en alternative, le dispositif 2003 de pistage peut être un dispositif d'acquisition et de traitement d'images vidéo configuré pour mesurer la position POS, la trajectoire TRAJ et/ou la vitesse VIT sur la base d'une analyse desdites images. A ce titre, selon certains modes de réalisation, le dispositif 2003 de pistage de véhicules 1003 comprend un dispositif d'acquisition vidéo configuré pour déterminer la position et la trajectoire des véhicules à partir d'une vidéo.

Selon un deuxième aspect de l'invention, en référence à la Fig. 3, il est fourni un procédé d'acquisition d'images pour automate de contrôle routier, ledit procédé comprend les étapes suivantes :
(a) mesurer 3001 la trajectoire TRAJ, la position POS et la vitesse VIT d'au moins un véhicule 1003 ;
(b) illuminer 3002 le véhicule 1001 à l'aide d'un rayonnement infrarouge ;
(c) acquérir 3003 au moins une image infrarouge IM-IR du véhicule 1003 illuminé par ledit rayonnement infrarouge ;
(d) traiter 3004 l'image infrarouge IM-IR dudit véhicule 1003 par application d'un premier algorithme ALG-1 de classification préalablement entraîné pour détecter les véhicules 1003, ledit algorithme étant en outre préalablement entraîné pour classer les véhicules selon leur catégorie CAT, et/ou classer un ou plusieurs comportement COMP des conducteurs des véhicules 1003 ;
lorsque la vitesse VIT du véhicule, la position POS du véhicule, la catégorie CAT du véhicule 1003, et/ou un comportement COMP du conducteur satisfait à au moins un critère d'infraction :
(e) illuminer 3005 le véhicule 1003 à l'aide de lumière visible ;
(f) acquérir une image en couleur IM-VIS du véhicule illuminé 1003 à l'aide de lumière visible.

Un procédé selon le deuxième aspect de l'invention peut notamment être mis en œuvre par le système selon le premier aspect de l'invention. Tous les modes de réalisation décrits précédemment concernant le système selon le premier aspect de l'invention s'appliquent mutatis mutandis au procédé selon le deuxième aspect de l'invention.

En particulier, selon certains modes préférés de réalisation, le premier algorithme ALG-1 de classification est en outre préalablement entraîné pour extraire, à partir des images infrarouges, le numéro d'immatriculation des véhicules, et les étapes (e) et (f) lorsque le numéro d'immatriculation satisfait à au moins un critère CRIT-INF d'infraction.

Selon certaine modes préférés de réalisation, le procédé comprend en outre les étapes suivantes :
(g) traiter l'image en couleur IM-VIS du véhicule 1003 par application d'un deuxième algorithme ALG-2 de classification préalablement entraîné pour détecter, à partir desdites images en couleurs, les véhicules, ledit algorithme étant en outre préalablement entraîné pour classer les véhicules 1003 selon leur catégorie CAT, et/ou classer un ou plusieurs comportement COMP des conducteurs des véhicules 1003;
(h) comparer les informations inférées lors du traitement par le premier algorithme ALG-1 avec les informations inférées du traitement par le deuxième algorithme ALG-2 de classification ;
(i) valider les informations inférées lors du traitement par le premier algorithme ALG-1 si lesdites informations correspondent à celles inférées lors du traitement par le deuxième algorithme ALG-2 de classification.

### Références

### Littérature brevet

GB 2272305 A [RICOH KK [JP]] 11.05.1994.
EP 2 157 558 A1 [JENOPTIK ROBOT GMBH] 24.02.2010.
CN 101770692 A [UNIV JILIANG CHINA] 07.07.2010.
WO 2010/085931 A1 [JENOPTIK ROBOT GMBH [DE]] 05.08.2010.
US 2013/191014 A1 [XEROX CORP [US]] 25.07.2013.
WO 2014/163892 A1 [3M INNOVATIVE PROPERTIES CO [US]] 09.10.2014.
WO 2017/006583 A1 [OMRON TATEISI ELECTRONICS CO [JP]] 12.01.2017.
WO 2019/137385 A1 [UNIV HEFEI NORMAL [CN]] 18.07.2019.
WO 2020/014731 A1 [ACUSENSUS PTY LTD [AU]] 23.01.2020.
EP 4 261 803 A1 [ROADIA GMBH [DE] 18.10.2023.

### Littérature non-brevet

Andrew G., et al. (2017) "Mobilenets: Efficient convolutional neural networks for mobile vision applications." arXiv preprint arXiv:1704.04861.
Mark, et al. (2018) "Mobilenetv2: Inverted residuals and linear bottlenecks." Proceedings of the IEEE conference on computer vision and pattern recognition.
Howard, Andrew, et al. (2019) "Searching for mobilenetv3." Proceedings of the IEEE/CVF international conference on computer vision.
Qin, Danfeng, et al. (2024) "MobileNetV4-Universal Models for the Mobile Ecosystem." arXiv preprint arXiv:2404.10518.

## Revendications

1. Système (2000) d'acquisition d'images pour automate (1001) de contrôle routier comprenant :
- un dispositif (2001) d'illumination infrarouge ;
- une caméra (2002) sensible aux rayonnements infrarouges ;
- un dispositif (2003) de pistage de véhicules routiers ;
- un dispositif (2004) d'éclairage en lumière visible de type flash ;
- un dispositif photographique (2005) en couleurs ;
- un dispositif (2006) de traitement de données configuré pour traiter les images infrarouges (IM-IR) acquises par la caméra (2002) sensible aux rayonnements infrarouges par application d'un premier algorithme (ALG-1) de classification préalablement entraîné pour détecter les véhicules (1003), ledit algorithme étant en outre préalablement entraîné pour classer les véhicules (1003) selon leur catégorie (CAT), et/ou classer un ou plusieurs comportements (COMP) des conducteurs des véhicules (1003) ;
le système (2000) est configuré pour réaliser les étapes suivantes :
(a) mesurer (3001) la trajectoire (TRJ), la position (POS) et la vitesse (VIT) d'au moins un véhicule (1003) à l'aide du dispositif (2003) de pistage de véhicules routiers ;
(b) illuminer (3002) le véhicule (1003) à l'aide du dispositif (2001) d'illumination infrarouge ;
(c) acquérir (3003), à l'aide de la caméra (2002) sensible aux rayonnements infrarouges, au moins une image infrarouge (IM-IR) du véhicule (1003) illuminé par le dispositif (2001) d'illumination infrarouge ;
(d) traiter (3004) l'image infrarouge (IM-IR) dudit véhicule (1003) à l'aide du dispositif (2006) de traitement de données ; lorsque la vitesse (VIT) du véhicule, la position (POS) du véhicule, la catégorie (CAT) du véhicule, et/ou un comportement (COMP) du conducteur satisfait à au moins un critère (CR-INF) d'infraction :
(e) illuminer (3005) le véhicule à l'aide du dispositif d'éclairage en lumière visible ;
(f) acquérir (3006) une image en couleur (IM-VIS) du véhicule (1003) illuminé à l'aide du dispositif photographique (2005) en couleurs.

2. Système (2000) selon la revendication 1, tel que le critère (CR-INF) d'infraction pour la vitesse (VIT) du véhicule (1003) est le dépassement de la vitesse maximale autorisée pour une ou plusieurs catégories (CAT) de véhicules (1003).

3. Système (2000) selon l'une quelconque des revendications 1 à 2, tel que le critère (CR-INF) d'infraction pour la trajectoire (TRJ) et/ou la position (POS) du véhicule (1003) est choisi parmi le franchissement non autorisé d'une ligne d'arrêt, le non-respect des distances entre véhicules, l'interdiction de circulation routière dans une zone géographique définie, l'interdiction de circulation sur une voie routière pour une ou plusieurs catégories de véhicule, le dépassement non autorisé d'un véhicule par un autre selon un ou plusieurs catégories de véhicule.

4. Système (2000) selon l'une quelconque des revendications 1 à 3, tel que le critère (CR-INF) pour le comportement (COMP) du conducteur du véhicule (1003) est choisi parmi l'utilisation d'un dispositif interdit par le conducteur du véhicule et le non-port des équipements individuels de sécurité.

5. Système (2000) selon l'une quelconque des revendications 1 à 4, tel que le premier algorithme (ALG-1) de classification est en outre préalablement entraîné pour extraire, à partir des images infrarouges, le numéro d'immatriculation des véhicules.

6. Système (2000) selon la revendication 5, tel qu'il est en outre configuré pour exécuter les étapes (e) et (f) lorsque le numéro d'immatriculation satisfait à au moins un critère (CR-INF) d'infraction.

7. Système (2000) selon l'une des revendications 1 à 6, tel que le dispositif (1006) de traitement de données est en outre configuré pour réaliser les étapes suivantes :
g) traiter l'image en couleur (IM-VIS) du véhicule (1003) acquise à l'aide du dispositif photographique (2005) par application d'un deuxième algorithme (ALG-2) de classification préalablement entraîné pour détecter, à partir desdites images en couleurs (IM-VIS), les véhicules (1003), ledit algorithme étant en outre préalablement entraîné pour classer les véhicules selon leur catégorie (CAT), et/ou classer un ou plusieurs comportement (COMP) des conducteurs des véhicules (1003) ;
(h) comparer les informations inférées lors du traitement par le premier algorithme (ALG-1) avec les informations inférées du traitement par le deuxième algorithme (ALG-2) de classification ;
(i) valider les informations inférées lors du traitement par le premier algorithme (ALG-1) si lesdites informations correspondent à celles inférées lors du traitement par le deuxième algorithme (ALG-2) de classification.

8. Système (2000) selon l'une quelconque des revendications 1 à 7, tel que premier algorithme (ALG-1) de classification et/ou le deuxième algorithme (ALG-2) de classification sont des réseaux de neurones artificiels convolutifs.

9. Système selon l'une quelconque des revendications 1 à 7, tel que le dispositif (2003) de pistage de véhicules (1003) comprend un télémètre, de préférence de type LIDAR ou RADAR.

10. Système selon l'une quelconque des revendications 1 à 8, tel que le dispositif (2003) de pistage de véhicules (1003) comprend en outre un dispositif d'acquisition vidéo configuré pour déterminer la position et la trajectoire des véhicules à partir d'une vidéo.

11. Procédé d'acquisition d'images pour automate (1001) de contrôle routier, ledit procédé comprend les étapes suivantes :
(a) mesurer (3001) la trajectoire (TRAJ), la position (POS) et la vitesse (VIT) d'au moins un véhicule (1003) ;
(b) illuminer (3002) le véhicule (1001) à l'aide d'un rayonnement infrarouge ;
(c) acquérir (3003) au moins une image infrarouge (IM-IR) du véhicule (1003) illuminé par ledit rayonnement infrarouge ;
(d) traiter (3004) l'image infrarouge (IM-IR) dudit véhicule (1003) par application d'un premier algorithme (ALG-1) de classification préalablement entraîné pour détecter les véhicules (1003), ledit algorithme étant en outre préalablement entraîné pour classer les véhicules selon leur catégorie (CAT), et/ou classer un ou plusieurs comportement (COMP) des conducteurs des véhicules (1003) ;
lorsque la vitesse (VIT) du véhicule, la position (POS) du véhicule, la catégorie (CAT) du véhicule (1003), et/ou un comportement (COMP) du conducteur satisfait à au moins un critère d'infraction :
(e) illuminer (3005) le véhicule (1003) à l'aide de lumière visible ;
(f) acquérir une image en couleur (IM-VIS) du véhicule illuminé (1003) à l'aide de lumière visible.

12. Procédé selon la revendication 11, tel que premier algorithme (ALG-1) de classification est en outre préalablement entraîné pour extraire, à partir des images infrarouges, le numéro d'immatriculation des véhicules, et exécuter les étapes (e) et (f) lorsque le numéro d'immatriculation satisfait à au moins un critère (CRIT-INF) d'infraction.

13. Procédé selon la revendication 12, tel qu'il comprend en outre les étapes suivantes :
(g) traiter l'image en couleur (IM-VIS) du véhicule (1003) par application d'un deuxième algorithme (ALG-2) de classification préalablement entraîné pour détecter, à partir desdites images en couleurs, les véhicules, ledit algorithme étant en outre préalablement entraîné pour classer les véhicules (1003) selon leur catégorie (CAT), et/ou classer un ou plusieurs comportement (COMP) des conducteurs des véhicules (1003) ;
(h) comparer les informations inférées lors du traitement par le premier algorithme (ALG-1) avec les informations inférées du traitement par le deuxième algorithme (ALG-2) de classification ;
(i) valider les informations inférées lors du traitement par le premier algorithme (ALG-1) si lesdites informations correspondent à celles inférées lors du traitement par le deuxième algorithme (ALG-2) de classification.
